# EUROPEAN PATENT APPLICATION

(11) **EP 0 892 231 A2**
(43) Date of publication of application: **20.01.1999**
(21) Application number: 98305271.3
(22) Date of filing: 02.07.1998
(51) Int. Cl.: F25D 29/00, F25D 17/02, B23Q 11/14

(54) **Maintenance pre-prediction system in isothermal-liquid circulating apparatus**

(30) Priority: 14.07.1997 JP 203842/97
(71) Applicant: SMC CORPORATION, Minato-ku Tokyo 105 (JP)
(72) Inventor: Ozawa, Toru, Yawara-mura, Tsukuba-gun, Ibaraki (JP)
(74) Representative: Findlay, Alice Rosemary

(57) **Abstract**

In an isothermal-liquid circulating apparatus for circulating and supplying an isothermal refrigerant liquid to a load, sensors are provided in each portion of the apparatus for continuously monitoring various parameters. The apparatus includes an alarm means for determining a site of the apparatus that requires maintenance and a time at which maintenance will be required in order to provide an alarm before said apparatus becomes defective or malfunctions, based on the value of the monitored parameters output from the sensors.

## Description

The present invention relates to a system for predicting the need for maintenance and alerting an operator of an isothermal-liquid circulating apparatus for supplying an isothermal refrigerant liquid to a load.

Various mechanical apparatuses having an isothermal portion, e.g., semiconductor fabrication apparatuses require an isothermal refrigerant liquid to be continuously supplied to the isothermal portion (a load) in order to maintain the load at a predetermined temperature. Such apparatuses include an isothermal-liquid circulating apparatus that supplies an isothermal refrigerant liquid. The refrigerant liquid, the temperature of which has been increased by the load, is returned to the isothermal-liquid circulating apparatus, where the liquid is cooled by a heat exchanger, then heated by a heater so as to have a predetermined temperature, and then circularly supplied to the load.

As described above, such an isothermal-liquid circulating apparatus is employed not only in semiconductor fabrication apparatuses but also in other mechanical apparatuses (master apparatuses) used in various industrial fields that require the temperature to be controlled, in order to support the operations of these apparatuses. A defect in the isothermal-liquid circulating apparatus or its malfunction may cause the master apparatus to be stopped, resulting in considerable loss.

In general, an isothermal-liquid circulating apparatus comprises a cooling circuit section for cooling in the heat exchanger the refrigerant liquid returned from the load; a circulating circuit section for heating to a predetermined temperature the refrigerant liquid cooled by the heat exchanger and then delivering it, and equipment for operating these sections, the cooling and circulating circuit sections and the generating equipment being composed of a large number of parts. If even one of the parts becomes defective, not only may the isothermal-liquid circulating apparatus become defective or malfunction but its master apparatus may malfunction, be shut down, or, in an extreme case become defective.

Accordingly, steps must be taken so as to prevent the isothermal-liquid circulating apparatus from malfunctioning. Manufacturers using isothermal-liquid circulating apparatuses, do not usually monitor the apparatus continuously due to cost. The parts of the apparatus, however, are inevitably exhausted or degraded over time, thereby reducing its life expectancy or giving rise to defects.

Thus, if the isothermal-liquid circulating apparatus becomes defective, post-processing such as troubleshooting or the replacement of the parts must be carried out, requiring a large amount of time before recovery, possibly resulting in considerable loss.

Conventional systems that deal with these problems are referred to as "remote maintenance" systems. In such systems, various sensors monitor the operational condition of the apparatus, which is transmitted to a specified place via a telephone line if a defect or malfunction occurs in the apparatus. Service personnel is then dispatched for repairs. This system, however, only partly facilitates the post-processing by detecting a defect in the isothermal-liquid circulating apparatus or its malfunction and initiating recovery processing.

It is a technical object of this invention to provide an isothermal-liquid circulating apparatus such as that described above in which a site of the apparatus that requires maintenance and a time at which maintenance will be required is determined before malfunction occurs in order to minimize the downtime of the apparatus.

To achieve this object, this invention provides a maintenance pre-prediction system in an isothermal-liquid circulating apparatus for circulating and supplying an isothermal refrigerant liquid to a load, characterised in that the apparatus includes internal sensors that continuously monitor various apparatus parameters and an alarm means for determining a time at which maintenance will be required in order to provide an alarm before said apparatus becomes defective or malfunctions, based on the value of the monitored parameters of each portion in the apparatus, which is obtained as the output from the sensors.

According to a preferred embodiment of the maintenance pre-prediction system, the sensors installed in the isothermal-liquid circulating apparatus for continuously monitoring the various quantities of state include sensors that detect variations in monitored parameter values (hereinafter referred to as quantities of state) such as the temperature of each portion, the value of a current flowing through an electrically driven portion, and the pressure and flow of the refrigerant and the system includes the alarm means for determining a site of the apparatus that requires maintenance and a time at which maintenance will be required in order to provide an alarm based on the quantity of state of each portion in the apparatus, which is obtained as the output from the sensors. Alternatively, a sensing means for detecting the number of operations of a mechanical operating section including valves and the accumulated value of the time during which the heater is supplied with power is installed in the isothermal-liquid circulating apparatus as the sensors, and an alarm means is provided that determines a site of the apparatus that requires maintenance and the time at which such maintenance will be required based on the quantities of state of each portion of the apparatus obtained as the output from the sensors.

In the maintenance pre-prediction system having such a configuration, the isothermal-liquid circulating apparatus for circulating and supplying an isothermal refrigerant liquid to a load uses the sensors that detect quantities of state such as the temperature of each portion, the value of a current flowing through an electrically driven portion, and the pressure and flow of the refrigerant in order to continuously monitor variations in the quantities of state, or uses sensors that detect the accumulated values of the number of times at which mechanical operational parts including valves have operated and of the time for which a heater has been supplied with power in order to monitor these quantities of state, so that based on the output from the sensors, a site of the apparatus that requires maintenance and a time at which maintenance will be required are determined to allow the alarm means to provide an alarm for maintenance before the apparatus becomes defective or malfunctions instead of post-processing after the apparatus has become defective or malfunctioned. This alarm can be transmitted not only to an operation display section of the isothermal-liquid circulating apparatus but also to an operation display section of a master apparatus or a control room or to a remote site via a telephone line.

As a result, a site of the apparatus that requires maintenance and a time at which maintenance will be required can be determined before a malfunction occurs, thereby minimizing the downtime of the apparatus.

The invention will now be described by way of example and with reference to the accompanying drawings in which:

FIG. 1 is a block diagram of an isothermal-liquid circulating apparatus including a maintenance pre-prediction system according to this invention.

FIGS. 2(A) and (B) are explanatory drawings schematically showing variations in outputs from a temperature sensor in the isothermal-liquid circulating apparatus.

FIG. 3 is a flowchart wherein an alarm means determines the contents of an alarm based on changes in the output from the temperature sensor in FIG. 2.

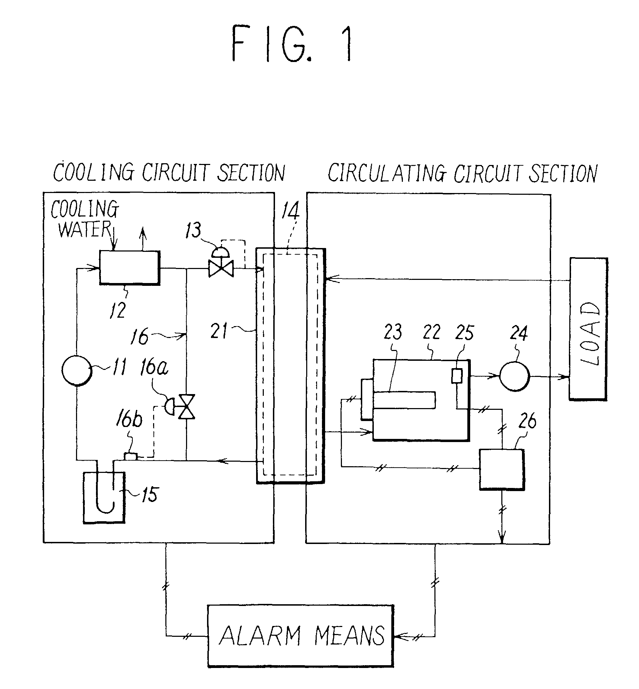

FIG. 1 shows an example of an isothermal circulating apparatus including a maintenance pre-prediction system according to this invention.

This isothermal-liquid circulating apparatus essentially circulates and continuously supplies an isothermal refrigerant liquid to an isothermal section (a load) in various mechanical apparatuses, and mainly comprises a cooling circuit section for cooling in a heat exchanger the refrigerant liquid returned from the load; a circulating circuit section for heating to a predetermined temperature the refrigerant liquid cooled by the heat exchanger and then delivering it; and various equipment for operating these sections, e.g., an activation switch, a temperature setting device for setting the temperature of the refrigerant liquid, an input/display device including an operation display device for displaying the current operational condition, a sequencer that provides a series of operations and various controls, and electrical equipment including various electrical parts.

The cooling circuit section in the isothermal-liquid circulating apparatus generally comprises a compressor 11 that compresses the refrigerant into a hot and highly pressurized gas; a condenser 12 that cools and condenses the gas into a highly pressurized refrigerant (liquid); a pressure-reducing device (a pressure-reducing valve) 13 that reduces the pressure of the refrigerant; an evaporator 14 that evaporates the refrigerant with its pressure reduced to reduce the temperature; and an accumulator 15, all of which are connected in series. Furthermore, the cooling circuit section includes an overheat prevention circuit 16 that directly returns the refrigerant compressed by the compressor 11 to the accumulator 15 when the evaporator 14 is subjected to a large load; and an overheat prevention valve 16a in the circuit 16 that opens and closes the overheat prevention circuit 16 based on readings from a temperature sensor 16b located on the upstream side of the accumulator 15 for detecting the temperature of the refrigerant.

On the other hand, the circulating circuit section comprises a heat exchanger 21 that cools the returned refrigerant liquid with its temperature increased by the load by exchanging the heat between the refrigerant and the evaporator 14; a tank 22 for the refrigerant liquid having a heater 23 built into itself; and a pump 24 that supplies and circulates to the load the refrigerant liquid heated to a predetermined temperature by the heater 23, all of which are connected in series.

Thus, the refrigerant liquid with its temperature increased by the load is cooled by the refrigerant in the cooling circuit section that flows through the evaporator 14 provided in the heat exchanger 21.

In addition, a temperature sensor 25 that detects the temperature of the refrigerant liquid to output it as a signal is provided near an outlet of the tank 22, and a temperature controller 26 is installed in the circulating circuit section to control the amount of power supplied to the heater 23 based on the output signal from the temperature sensor 25. The temperature controller 26 compares the temperature detected by the temperature sensor 25 with a set temperature for the refrigerant liquid in order to control the amount of power supplied to the heater 23, i.e., the amount of heat provided in the tank 22.

To predict necessary maintenance, the isothermal-liquid circulating apparatus includes, in each portion, sensors that continuously monitor various quantities of state. The sensors include the temperature sensor that detects the temperatures of the cooling and circulating circuit sections; a current sensor that detects the value of a current flowing through a motor that drives the compressor 11 and pump 24 as well as other electrically driven portions; a pressure sensor that detects the pressure of the refrigerant or refrigerant liquid in each portion of the refrigerant channel in the cooling and circulating circuit sections; a flow sensor that detects the flow the refrigerant liquid in the refrigerant channel in the circulating circuit section; and various other sensors that are effective in predicting the malfunction of the isothermal-liquid circulating apparatus and that detects variations in the quantity of state, all of which can each be installed at a desired position in the isothermal-liquid circulating apparatus.

In addition, the sensor may be used as a sensing means such as a counter that counts the number of times mechanical operating portions including solenoid valves used in the cooling and circulating circuit sections have been operated; an accumulator that determines the accumulated value of the time for which power has been supplied to the heater 23; or an accumulator for operation time that detects when various consumables have reached their life expectancy.

The quantity of the state of each portion in the apparatus, which can be obtained as the output from the sensors installed in the isothermal-liquid circulating apparatus is transmitted to an alarm means at an arbitrary position.

The alarm means is composed of an arithmetic and control unit for determining a site of the apparatus that requires maintenance and a time at which maintenance will be required in order to provide a required alarm before a defect or malfunction occurs, based on the quantities of state obtained from the sensors or variations in the quantities. Thus, the alarm means must store the preset range of appropriate values for all data collected by the temperature, current, pressure, or flow sensor; an upper and a lower limit values beyond which a malfunction may occur; or a criteria with which a malfunction can be determined.

This is also applied to limit values such as the limit number of times that a mechanical operational part can operate, the time for which the heater 23 has been supplied with power, and the time for which various consumables has been used.

In the maintenance pre-prediction system having this configuration, the sensors that detect the quantities of state including the temperature of each portion in the isothermal-liquid circulating apparatus, the value of a current flowing through an electrically driven portion, and the pressure of the refrigerant or refrigerant liquid, and the flow of the refrigerant liquid, or the sensors that detect the accumulated values of the number of times at which mechanical operational parts including valves have been operated and of the time for which the heater has been supplied with power are used to monitor these quantities of state, so that based on the output from the sensors, the alarm means can determine a site of the apparatus that requires maintenance and a time at which maintenance will be required to provide a maintenance alarm before the apparatus becomes defective or malfunctions instead of post-processing after the apparatus has become defective or malfunctioned. This alarm urges the operator or service personnel to provide maintenance. Detection data from the apparatus can be directly recorded on storage media such as a floppy disc.

This alarm can be displayed not only on an operation display section of the isothermal-liquid circulating apparatus but also on an operation display section of a master apparatus or a control room using a light, an alarm sound, or characters, or can be transmitted to a remote maintenance company via a telephone line to alarm it.

Examples of malfunctions of the isothermal-liquid circulating apparatus that can be predicted from the output from the sensors or from changes in the output are listed below.
(1) Variations in temperature data for the refrigerant, refrigerant liquid, or cooling water for the condenser: changes in the capability
(2) Variations in the value of a current flowing through each motor: life expectancy of the motor
(3) Arrival at the limit value for the number of turn-ons and -offs of a solenoid valve: life expectancy of the solenoid vale
(4) Arrival at the limit value for the time for which the heater has been supplied with power: life expectancy of the heater
(5) Decrease in the pressure of the refrigerant: gas leakage, etc.

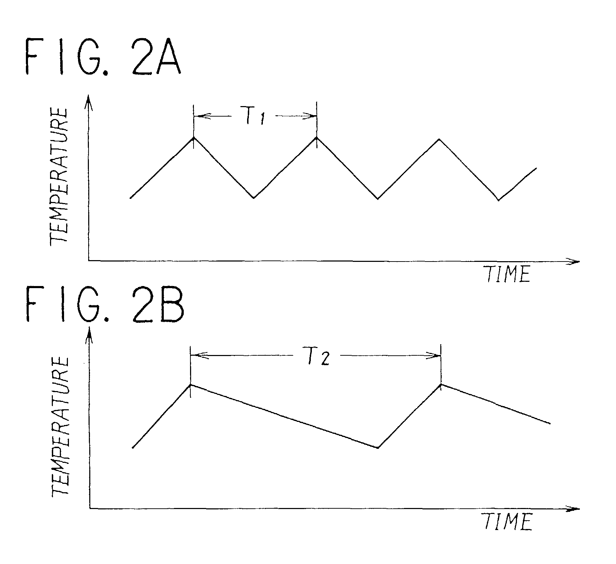

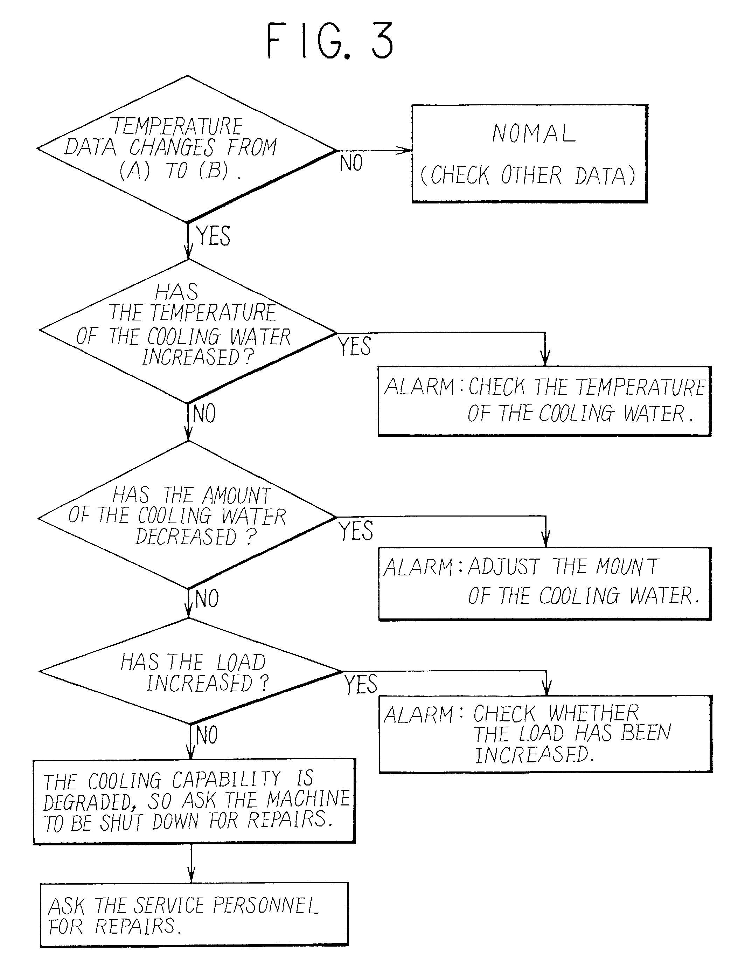

The detection of temporal changes in the cooling capability based on temperature data obtained from the temperature sensor 25 installed in the tank 22 in order to determine malfunction is now described with reference to FIGS. 2(A) and (B) and FIGS. 3.

It is assumed that data on the cooling capability of the isothermal-liquid circulating apparatus (output from the temperature sensor 25) exhibits a normal characteristic as schematically shown in FIG. 2(A) but that the characteristic changes as schematically shown in FIG. 2(B). Based on this change in characteristic between (A) and (B), the period of changes in the temperature of the refrigerant liquid increased from T1 to T2.

If temperature data such as that shown in FIGS. 2 (A) and (B) is obtained, the arithmetic and control unit constituting the alarm means can make determinations for alarm as shown in the flowchart in FIG. 3 in order to predict maintenance for the isothermal-liquid circulating apparatus beforehand.

An alarm is issued based on similar determinations if data detected by the other sensors deviates from the range of appropriate values, exceeds the upper or lower limit value beyond which the apparatus may malfunction, or deviates from the determination criteria with which a malfunction can be determined, or if the number of times that a mechanical operational part has been operated or the time for which the heater or any consumable has been used exceeds the respective limit value.

As described above, this maintenance pre-prediction system determines beforehand a site of the apparatus that requires maintenance and a time at which maintenance will be required to alarm the operator or service personnel in order to prevent defects or malfunctions. Unlike the post-processing in which troubleshooting or the replacement of parts is started after the isothermal-liquid circulating apparatus has become defective, this method can recover a part for which a malfunction is expected to occur without stopping the isothermal-liquid circulating apparatus or its master apparatus, and can also inform the operator of a part that may malfunction using an alarm based on an output from an activated sensor, thereby reducing the time required for maintenance and minimizing losses caused by the stoppage of the apparatus.

In the isothermal-liquid circulating apparatus, the maintenance pre-prediction system of this invention described above can determine a site of the apparatus that requires maintenance and a time at which maintenance will be required to minimize the downtime of the apparatus.

## Claims

1. A maintenance prediction system for an isothermal-liquid circulating apparatus for circulating and supplying an isothermal refrigerant liquid to a load, the maintenance pre-prediction system comprising sensors provided in each section of the apparatus for continuously monitoring various parameters and an alarm means for determining a time at which maintenance will be required in order to provide an alarm before a defect or malfunction occurs, based on the values of the monitored parameters in each section of the apparatus output from the sensors.

2. A maintenance pre-prediction system as claimed in Claim 1 wherein sensors are provided for detecting variations in the temperature of each section, the current in an electrically driven section, and the pressure and flow of the refrigerant, and wherein the alarm means is operative in response to variations in the values of the monitored parameters.

3. A maintenance pre-prediction system as claimed in either Claim 1 or Claim 2 wherein the sensors include a sensor for detecting the number of times that one or more mechanical devices have been actuated and the accumulated time for which power has been supplied to a heater, and the alarm means is operative in response to the value of the monitored parameters.

4. A maintenance pre-prediction system as claimed in any preceding claim wherein the alarm means is operative to determine the location of the apparatus requiring maintenance and the alarm is transmitted to a remote control site.
